# EUROPÄISCHE PATENTSCHRIFT

(11) **EP 0 487 860 B1**
(45) Veröffentlichungstag und Bekanntmachung des Hinweises auf die Patenterteilung: **10.08.1994**
(21) Anmeldenummer: 91116892.0
(22) Anmeldetag: 03.10.1991
(51) Int. Cl.: B60J 7/22

(54) **Cabriolet mit einer windabweisenden Abdeckung**
Cabriolet with a wind-deflecting cover
Cabriolet avec couverture de déflexion d'air

(30) Priorität: 27.11.1990 DE 4037705
(43) Veröffentlichungstag der Anmeldung: 03.06.1992
(60) Teilanmeldung: 94100587.8
(73) Patentinhaber: MERCEDES-BENZ AG, 70327 Stuttgart (DE)
(72) Erfinder: Götz, Hans, Dipl.-Ing., W-7030 Böblingen 4 (DE); Baumann, Karl-Heinz, Dipl.-Ing., W-7048 Bondorf (DE)

(56) Entgegenhaltungen:
- DE-A- 3 836 375
- DE-A- 3 913 830
- DE-A- 3 923 558
- DE-C- 3 537 644
- DE-C- 3 914 036
- DE-C- 3 915 866

## Beschreibung

Die Erfindung betrifft ein Cabriolet mit einer windabweisenden Abdeckung gemäß dem Oberbegriff des Patentanspruchs 1.

Aus der DE-A 39 23 558 ist bereits ein Cabriolet mit einer windabweisenden Abdeckung bekannt, auf der hinter den Vordersitzen in Wirkstellung senkrecht ein als Scheibe, Platte oder umrahmtes Netz ausgebildeter Windschutz befestigt ist. Der Windschutz ist in eine waagrechte Nichtgebrauchsstellung gegen die Abdeckung in Abdeckstellung umklappbar. Die überdeckung des Sitz- oder Stauraums hinter den Vordersitzen durch die Abdeckung wirkt mit einem derart heruntergeklappten Windschutz weit weniger ansprechend. Außerdem kann der Windschutz z.B durch einen auf ihm abgelegten Gegenstand beschädigt werden und wird erst durch ein Zusammenklappen der beiden Abdeckteile geschützt, wodurch aber die Abdeckteile ihre Abdeckfunktion nicht mehr voll wahrnehmen. Eine Abstützung der Wirkstellung des Windschutzes muß durch zusätzliche, stabil ausgebildete Abstützteile herbeigeführt werden.

In der DE-A 38 36 375 ist ein als Rollo ausgebildeter, senkrechter Windschutz beschrieben, der mit seiner Unterkante etwa auf Höhe der Bordkante eines Cabriolets endet und dort in ein etwa horizontales, gleichfalls netzbespannntes, eine Abdeckung bildendes Teil übergeht. Über die Ausbildung dieses Übergangs und die daraus resultierende Handhabung des Windschutzes und der Abdeckung ist hier nichts ausgesagt.

In der EP-A 02 58 823 sind zwei Rollos offenbart, deren Aufwickelrollen, jede für sich, in einem Aufnahmerohr gelagert sind, sowie beide Aufnahmerohre aneinander festgelegt sind. Die beiden Aufnahmerohre ragen nebeneinanderliegend sperrig vom Sitz ab und behindern damit bei einem Cabrio unter einer gewissen Verletzungsgefahr den Zugang zum Stauraum hinter den Vordersitzen.

Der Erfindung liegt die Aufgabe zugrunde, bei einer gattungsgemäßen Anordnung die Handhabung eines Windschutzes und einer damit verbundenen Abdeckung zu verbessern.

Die Aufgabe wird durch die kennzeichnenden Merkmale des Anspruchs 1 gelöst.

Ein Rollo als Windschutz, dessen Aufwickelrolle an der Abdeckung festgelegt ist, bietet den Vorteil, daß der Windschutz in Nichtgebrauchsstellung, also bei aufgewickeltem Rollomaterial bereits an der Abdeckung integriert liegt und optisch ansprechend verwahrt erscheint. Zur Aufnahme der Aufwickelrolle kann ein bereits vorhandenes, querverlaufendes Rahmenteil der Abdeckung herangezogen werden. Die horizontal am Cabriolet-Aufbau aufliegende Abdeckung ist durch das Zuklappen eines Verdeckkastendeckels mit dafür vorgesehenen Mitteln arretierbar, wenn gewährleistet ist, daß dieser nur bei stillstehendem Fahrzeug betätigt wird.

Die Gegenstände weiterer Unteransprüche bilden vorteilhafte Ausgestaltungsmöglichkeiten der Gegenstände vorherstehender Ansprüche.

Ein Ausführungsbeispiel der Erfindung ist in der Zeichnung dargestellt.

Es zeigen:
- Fig. 1:: einen Fondbereich eines Cabriolets mit einer horizontalen Abdeckung und einem daran vertikal aufragenden, rolloförmigen Windschutz,
- Fig. 2:: in geschnittener Seitenansicht den Fondbereich aus Fig. 1,

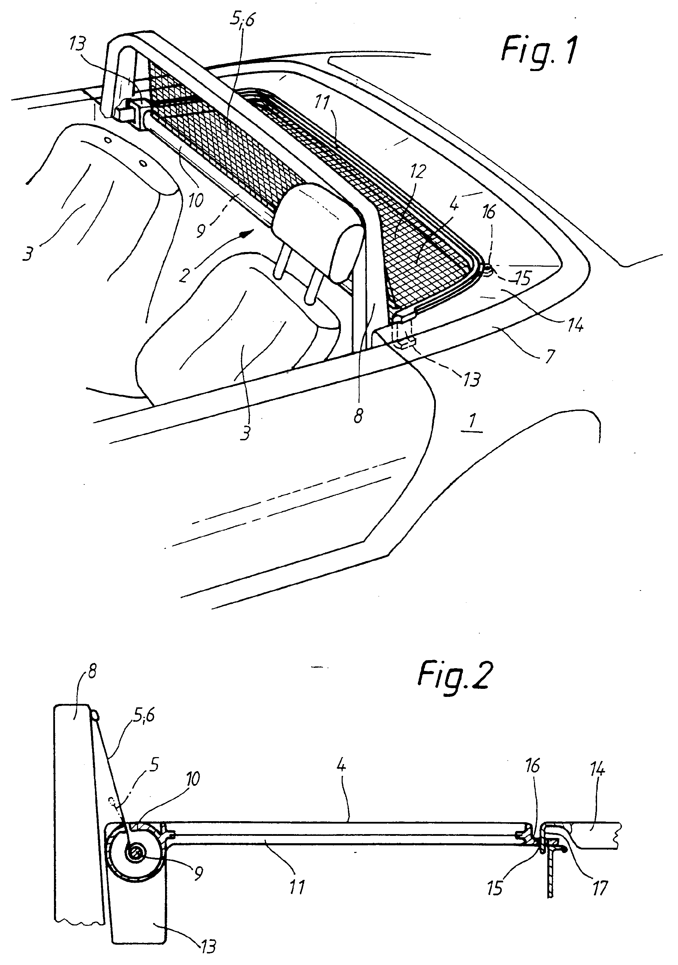

In Fig. 1 ist ein Fondbereich eines Cabriolets 1 dargestellt, dessen offener Raum 2 hinter einer vorderen Sitzreihe 3 durch eine horizontal aufliegende Abdeckung 4 überdeckt ist. An einer vorneliegenden Abschlußkante der Abdeckung 4 ist ein Windschutz 5 festgelegt, der hier durch ein Rollo 6 gebildet ist, das in Wirkstellung etwa senkrecht von der Höhe der Bordkante 7 des Cabriolets 1 aus hochragt und mit einem oberen Ende an einem Überrollbügel 8 lösbar befestigt ist. Der Windschutz 5 ist in eine Nichtgebrauchsstellung absenkbar, in der er um eine Aufwickelrolle 9 aufgewickelt liegt. Die Aufwickelrolle 9 ist an der Abdeckung 4 festgelegt und wird in ihrer Aufwickelbewegung durch eine nicht näher dargestellte Feder unterstützt. Wie in Fig. 2 deutlicher sichtbar, ist die Aufwickelrolle 9 in einem vorderen, querverlaufenden Rahmenteil 10 der Abdeckung 4 aufgenommen, wodurch der Windschutz 5 in Nichtgebrauchsstellung fast vollständig in diesem Rahmenteil 10 integriert liegt und damit optisch und funktional ansprechend untergebracht ist. Die Abdekkung 4 selbst ist als bespannter Rahmen 11 ausgebildet, der mit einem durchbrochenen Netz 12 bespannt ist. Ebenso weist das Rollo 6 eine durchbrochene Netzstruktur auf, so daß ein Betrachter durch die Abdeckung 4 sowie durch den Windschutz 5 hindurchsehen kann, und dennoch Windturbulenzen, die vom Fahrzeugfond gegen die vordere Sitzreihe 3 gerichtet sind, von dieser Sitzreihe 3 abgehalten werden. Die Abdeckung 4 zeigt vorne an ihrem Rahmen 11 seitlich liegende Auflagen 13, und nahe einem Verdeckkastendeckel 14 als Arretierungen mit einer Öffnung 15 versehene Fortsätze 16, in die ein Rastbolzen 17, der am Verdeckkastendeckel 14 befestigt ist, bei geschlossenem Verdeckkastendeckel 14 eingreift. Dadurch wird die Abdeckung 4 durch die Schließung des Verdeckkastendekkels 14 automatisch arretiert.

## Patentansprüche

1. Cabriolet mit einer windabweisenden Abdeckung (4), die den Raum (2) hinter einer vorderen Sitzreihe (3) nach oben abdeckt, und an der an einer vorneliegenden Abschlußkante ein Windschutz (5) befestigt ist, der in Wirkstellung etwa senkrecht von der Höhe der Bordkante (7) aus hochragt, und der in eine Nichtgebrauchsstellung absenkbar ist,
**dadurch gekennzeichnet**,
daß die Abdeckung (4) als bespannter Rahmen (11) ausgebildet ist, und daß der Windschutz (5) durch ein Rollo (6) gebildet ist, dessen Aufwickelrolle (9) im vorderen, querverlaufenden Rahmenteil (10) der Abdeckung (4) aufgenommen ist.

2. Cabriolet nach Anspruch 1,
**dadurch gekennzeichnet**,
daß nahe eines Verdeckkastendeckels (14) eines Fahrzeugverdecks liegende Arretierungen (16) der Abdeckung (4) als Fortsätze ausgebildet sind, die durch Rastmittel (17) des Verdeckkastendeckels (14) in dessen Schließstellung arretierbar sind.

3. Cabriolet nach Anspruch 1,
**dadurch gekennzeichnet,**
daß der Windschutz (5) in Wirkstellung an einem Überrollbügel (8) befestigbar ist.

4. Cabriolet nach einem der vorherstehenden Ansprüche,
**dadurch gekennzeichnet,**
daß der Windschutz (5) und/oder die Abdeckung (4) Abschnitte aufweisen, die als durchbrochenes Netz (12) ausgebildet sind.

## Claims

1. Cabriolet with a wind-deflecting cover (4) which covers the space (2) behind a front row of seats (3) at the top and on which is secured, at a forward boundary edge, a windscreen (5) which, in the operative position, projects approximately vertically from the level of the upper edge (7) and can be lowered into an out-of-use position, characterized in that the cover (4) is designed as a covered frame (11) and in that the windscreen (5) is formed by a roller blind (6), the winding-up roller (9) of which is accommodated in the forward, transversely extending frame part (10) of the cover (4).

2. Cabriolet according to Claim 1, characterized in that locking devices (16) of the cover (4), the said locking devices being situated near to a hood-compartment lid (14) of a vehicle hood, are designed as extensions which can be locked by locking means (17) of the hood-compartment lid (14) in the closed position of the latter.

3. Cabriolet according to Claim 1, characterized in that, in the operative position, the windscreen (5) can be fixed on a roll bar (8).

4. Cabriolet according to one of the preceding claims, characterized in that the windscreen (5) and/or the cover (4) have portions which are designed as an openwork net (12).

## Revendications

1. Cabriolet avec une couverture (4) de déflexion d'air, qui recouvre vers le haut l'espace (2) situé derrière une rangée de sièges avant (3) et à laquelle est fixé, sur une arête de délimitation située à l'avant, un pare-vent (5) qui, en position active, forme une saillie vers le haut, à peu près perpendiculairement par rapport à la partie haute de la ceinture de caisse (7) et qui peut être abaissé dans une position de non utilisation, caractérisé en ce que la couverture (4) est réalisée sous forme de cadre (11) entoilé, en ce que le pare-vent (5) est constitué par un store roulant (6) dont le rouleau d'enroulement (9) est logé dans la partie avant de cadre (10), s'étendant transversalement, de la couverture (4).

2. Cabriolet selon la revendication 1, caractérisé en ce que, sont réalisés, sous forme d'appendices, des éléments de fixation (16) de la couverture (4) situés près d'un couvercle de compartiment à capote (14) d'une capote de véhicule, qui sont susceptibles d'être bloqués à l'aide de moyens d'encliquetage (17) du couvercle de compartiment à capote (14), lorsqu'il est dans sa position de fermeture.

3. Cabriolet selon la revendication 1, caractérlsé en ce que le pare-vent (5) peut être fixé en position active à un arceau de sécurité (8).

4. Cabriolet selon l'une des revendications précédentes, caractérisé en ce que le pare-vent (5) et/ou la couverture (4) présentent des sections réalisées sous forme de filets (12) à claire-voie.
